# EUROPEAN PATENT APPLICATION

(11) **EP 1 691 122 A1**
(43) Date of publication of application: **16.08.2006**
(21) Application number: 06250623.3
(22) Date of filing: 06.02.2006
(51) Int. Cl.: F16K 41/02, F16J 15/26, F16J 15/28, F16J 15/00

(54) **Combined piston ring and staged leak-off sealing of valve stem**

(30) Priority: 09.02.2005 US 52846
(71) Applicant: GENERAL ELECTRIC COMPANY, Schenectady, New York 12345 (US)
(72) Inventor: Chan, Chin-Penn Peter, Watervilet New York 12189 (US); King, Matthew Kenneth, Albany New York 12210 (US); Althoff, Nicholas Keane, Greenville South Carolina 29615 (US)
(74) Representative: Bedford, Grant Richard

(57) **Abstract**

A seal for a valve stem in a steam turbine valve includes a ring carrier sleeve (14) surrounding at least a portion of a valve stem (12) mounted for axial reciprocating movement in a valve housing (16). At least one inner ring groove (20) is formed in an interior surface of the ring carrier sleeve, and a radially in-sprung ring (22) is seated in the at least one annular ring groove and engaged with the valve stem to thereby substantially block leakage of steam along the valve stem.

## Description

This invention relates generally to steam turbine valves and more specifically, to a sealing arrangement for a valve stem.

Parasitic steam losses due to poor valve stem sealing in steam turbine applications results in reduced efficiency and lost power output. The steam leakage to atmosphere can also be dangerous and leaves a negative visual image of the valve.

Prior valve configurations have incorporated tight valve stem clearances in a single or a multi-stage leak-off arrangement. This method results in a loss of useful energy and is therefore not completely satisfactory. Other valve stem arrangements allow a small percentage of steam leakage to atmosphere, especially when the valve is not wide open and back-seated.

The present invention involves the application of a single or combination of in-sprung and/or out-sprung piston rings to create a seal against steam leakage along the valve stem. In addition, the piston rings can be placed in an integrated bushing-ring carrier that allows for appropriate thermal expansions, maintaining the tight seal. The piston rings can be used exclusively if the required pressure drop is low, or in combination with a single or multi-stage leak-off from the valve stem if the required pressure drop is high.

In one exemplary embodiment, a single in-sprung piston ring is located in an integrated bushing-ring carrier surrounding a valve stem. In another embodiment, a pair of in-sprung rings are employed, with dual leak-off passages, one of the latter located axially between the pair of in-sprung rings. In still another embodiment, a pair of in-sprung rings are employed in combination with leak-off passages as described above, with the further addition of a pair of out-sprung rings between the bushing-ring carrier and the valve head or cover plate wall, with the out-sprung rings located on either side of a leak-off passage and between the pair of in-sprung rings.

In still another embodiment, three in-sprung rings are utilized in combination with a pair of leak-off passages in an alternating arrangement, with the intermediate ring located between the leak-off passages, and the remaining pair of leak-off passages located between the outer pair of in-sprung rings.

The utilization of multiple rings in combination with leak-off passages permits a staged pressure drop along the axial extent of the valve stem.

It is also contemplated that the integrated bushing-ring carrier can be constructed of multiple axial segments to facilitate assembly of the rings, particularly in field applications.

Accordingly, in one aspect, the present invention relates to a seal for a valve stem in a steam turbine valve comprising a ring carrier surrounding at least a portion of a valve stem mounted for axial reciprocating movement in a valve component; at least one inner ring groove formed in an interior surface of the carrier; and a radially in-sprung ring mounted in the at least one ring groove and engaged with the valve stem to thereby inhibit leakage of steam along the valve stem.

In another aspect, the present invention relates to a seal for a valve stem in a steam turbine valve head comprising a ring carrier surrounding at least a portion of a valve stem mounted for axial reciprocating movement in a valve component, the carrier having a radial flange to facilitate seating of the carrier in the valve head; at least one inner ring groove formed in an interior surface of the carrier; and a radially in-sprung ring mounted in at least one ring groove and engaged with the valve stem to thereby inhibit leakage of steam along the valve stem, wherein the radially in-sprung ring comprises a pair of back-to-back ring elements.

In still another aspect, the present invention relates to a seal for a valve stem in a steam turbine valve head comprising a ring carrier surrounding at least a portion of a valve stem mounted for axial reciprocating movement in a valve component, the carrier having a radial flange to facilitate seating of the carrier in the valve head; a pair of axially-spaced inner ring grooves formed in an interior surface of the carrier; a radially in-sprung ring mounted in each of the grooves and engaged with the valve stem to thereby inhibit leakage of steam along the valve stem, wherein the radially in-sprung ring comprises a pair of back-to-back ring elements; a first leak-off groove formed in an inner face of the carrier and located axially between the pair of axially-spaced inner ring grooves, the leak-off groove communicating with a leak-off port extending through the carrier; and a second leak-off groove formed on the inner face of the carrier, below the pair of axially spaced inner ring grooves and above the flange.

The invention will now be described in connection with the drawings identified below.
FIGURE 1 is a partial cross section illustrating an integrated bushing-ring carrier and valve stem in accordance with a first exemplary embodiment of the invention;
FIGURE 2 is a partial cross section illustrating an integrated bushing-ring carrier and valve stem in accordance with a second exemplary embodiment of the invention;
FIGURE 3 is a partial cross section illustrating an integrated bushing-ring carrier and valve stem in accordance with a third exemplary embodiment of the invention; and
FIGURE 4 is a partial cross section illustrating an integrated bushing-ring carrier and valve stem in accordance with a fourth exemplary embodiment of the invention.

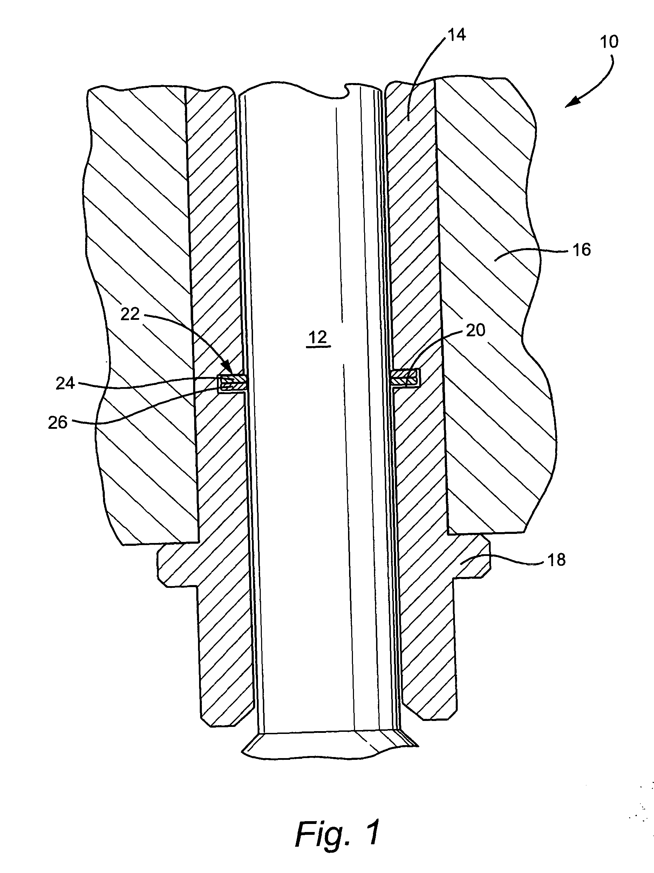

Referring to Figure 1, a valve stem and ring carrier assembly 10 in accordance with an exemplary embodiment of the invention includes a valve stem 12 movable in opposite axial directions within a circular, integrated bushing-ring carrier 14 that is, in turn, seated in a valve head or valve cover plate (or other valve component) 16. The bushing-ring carrier (or simply, ring carrier) 14 is provided with a radial shoulder 18 by which the carrier is properly located within the valve head, typically in a press-fit arrangement. An annular ring groove 20 is formed in the carrier, with the open end of the groove facing the valve stem 12. Seated within the groove 20 is a "piston ring" 22 that, in the illustrated embodiment, is sprung inwardly, i.e., the ring is biased radially inwardly to engage the valve stem 12. The ring 22, like conventional piston rings is composed of a pair of ring elements 24, 26 but will be referred to herein simply as the ring 22. It will be appreciated that the incorporation of the in-sprung ring 22 within the valve stem and bushing assembly establishes a seal that eliminates or at least substantially minimizes steam leakage along the valve stem. While the utilization of a discrete bushing-ring carrier 14 for carrying the ring 22 is preferable in most situations, it is, of course, possible to seat the ring 22 in a groove formed in other components, for example, in the valve head or cover plate directly.

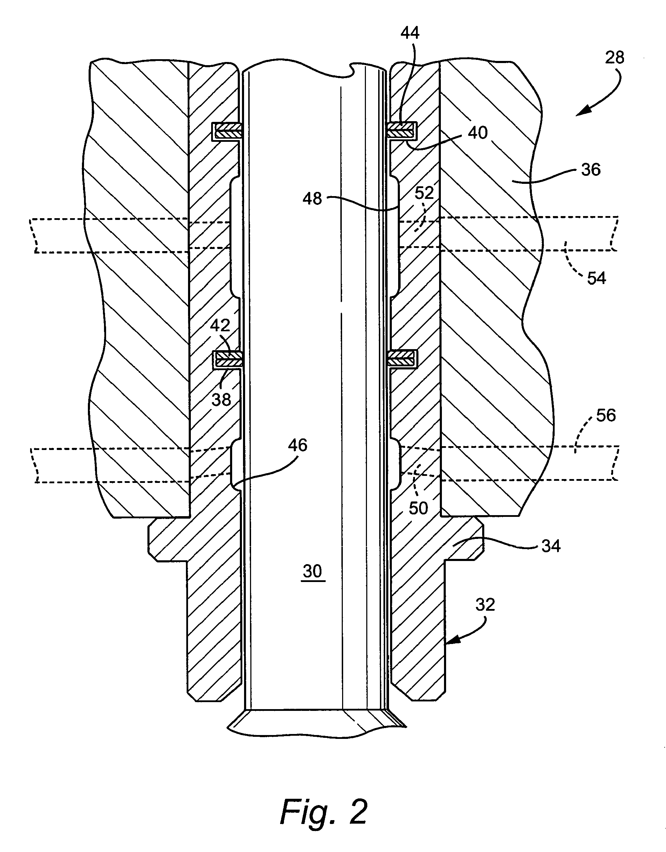

Figure 2 illustrates an alternative embodiment of the invention including a generally similar valve stem and bushing-ring carrier assembly 28. The assembly incorporates a valve stem 30 movable in opposite axial directions within an integrated bushing-ring carrier 32. Like the earlier described carrier 14, a radial shoulder 34 is provided to accurately seat the carrier within the valve head or cover plate 36. In this embodiment, first and second ring grooves 38, 40 are formed in the bushing-ring carrier 32 and are adapted to receive annular, radially in-sprung rings 42, 44, respectively. A first annular leak-off groove or area 46 is formed on the interior surface or inner face of the bushing-ring carrier 32 below the first ring 38 while a second and larger annular leak-off area or groove 48 is formed on the same inner face of the carrier, axially between the first and second rings 42, 44. The leak-off areas 46 and 48 communicate with one or more leak-off ports 50, 52, respectively, that communicate with one or more passages 54, 56 in the valve head 36.

With this arrangement, some of the leakage steam flowing along the valve stem 30 is diverted through the leak-off port 50 while steam that passes the first ring 42 can be removed via the leak-off port 52. Any residual steam leakage is substantially minimized if not prevented from escaping along the valve stem by the upper or second ring 44.

This seal arrangement provides a staged pressure drop along the valve stem 30 that is particularly desirable when the pressure drop is high.

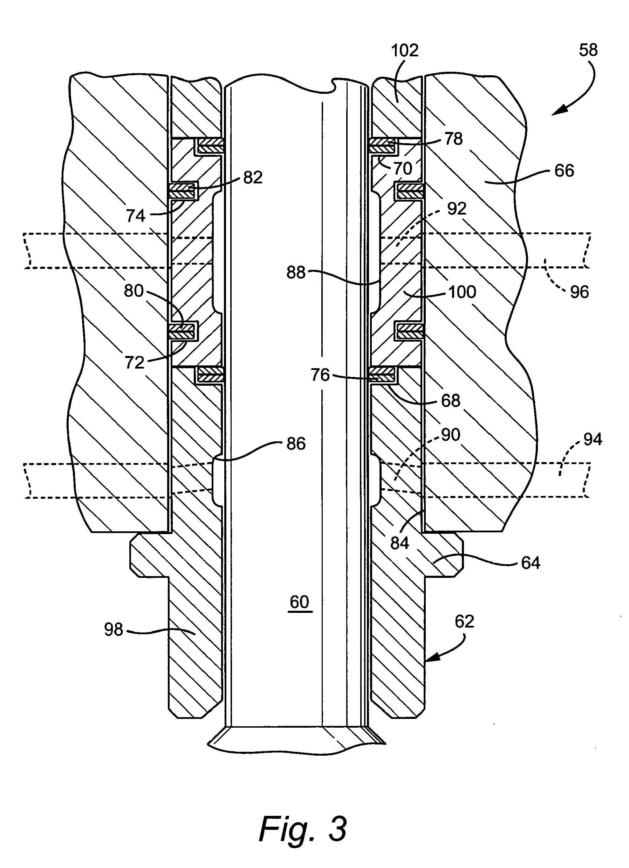

Figure 3 illustrates yet another exemplary embodiment of the invention. Here, the valve stem and integrated bushing-ring carrier assembly 58 includes a valve stem 60 movable in opposite linear directions within the bushing-ring carrier 62. Carrier 62 is provided with an annular, radially outwardly extending shoulder 64 to locate the carrier within the valve head or cover plate 66. Inner ring grooves 68 and 70 are formed on the interior surface of the carrier 62 while outer ring grooves 72 and 74 are formed on the outer surface of the carrier. Annular in-sprung rings 76 and 78 are seated in the inner ring grooves 68 and 70, while annular out-sprung rings 80, 82 are seated in the outer ring grooves 72, 74, respectively. Note that rings 76 and 78 are biased inwardly to engage the valve stem 60 while rings 80, 82 are biased outwardly to engage the valve head or cover plate wall 84. A first leak-off area or annular groove 86 is formed on the inner face of the carrier below the lower or first in-sprung ring 76, While a second leak-off area or annular groove 88 is formed on the same inner face between the in-sprung rings 76, 78 and generally centered between the out-sprung rings 80, 82. The annular leak-off grooves 86, 88 communicate with one or more leak-off ports 90, 92, respectively, which in turn, communicate with one or more passages 94, 96 in the valve head or cover plate 66.

The use of out-sprung rings is especially useful if there is a thermal mismatch between the bushing-ring carrier and the valve head or cover plate. In the event, however, an interference fit is obtained between the ring carrier 62 and valve head or cover plate wall 66 at temperature (see Figure 2), the out-sprung rings 80, 82 may be eliminated. Note also, that in this embodiment, the bushing-ring carrier 62 is made up of three individual sleeve sections or segments 98, 100 and 102, with the sections joined at the ring grooves 68, 70. This arrangement facilitates insertion of the in-sprung rings and is particularly advantageous in field-replacement applications.

With this seal arrangement, leakage steam is minimized if not eliminated in stages along the inner side of the carrier 62 as well as along the outer periphery of the carrier. In the latter instance, it is possible that leakage steam passing through ports 90 and 96 may escape along the wall 84 if not prevented by use of the out-sprung rings 80, 82. As noted above, if an interference fit is obtained at operating temperature between the carrier 62 and valve head or cover plate wall 84, the out-sprung rings may be eliminated.

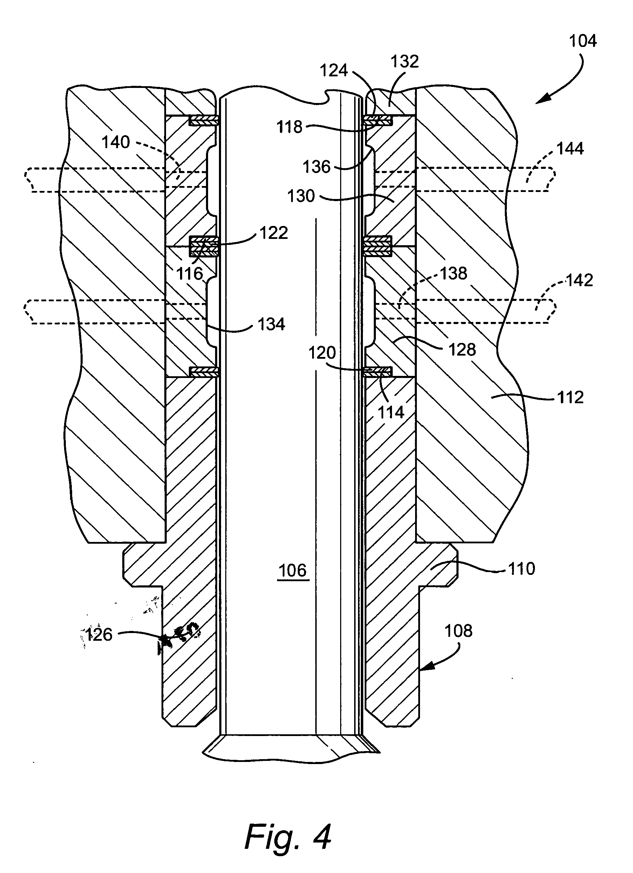

In Figure 4, a fourth exemplary embodiment of the invention includes a valve stem and bushing-ring carrier assembly 104. The valve stem 106 is movable in opposite linear directions within the bushing-ring carrier 108. A radially outwardly directed shoulder 110 provides accurate seating of the carrier within the valve head or valve cover plate 112.

First, second and third inner ring grooves 114, 116 and 118 are formed on the interior surface of the bushing-ring carrier 108 such that the grooves open toward the valve stem 106. Annular in-sprung rings 120, 122 and 124, respectively, are seated in the grooves and are biased inwardly into engagement with the valve stem 106. Here again, the integrated bushing-ring carrier 108 may, if desired, be composed of individual sections or segments 126, 128, 130 and 132 that are joined at the interfaces with grooves 114, 116 and 118, respectively, to facilitate assembly. Note that with this segmented approach, the in-sprung ring 122 may be comprised of a pair of rings to improve the sealing capacity.

A first annular leak-off groove or area 134 is formed on the inner face of the carrier 108 between the ring grooves 114 and 116 while a second annular leak-off groove or area 136 is formed on the same inner face of the carrier between rings 122 and 124. One or more leak-off ports 138 and 140 carry leakage steam away from the valve stem carrier via one or more passages 142, 144 in the valve head or cover plate 112. This is yet another seal arrangement where steam leakage pressure drop can be staged along the valve stem. It will be appreciated that still other variations of in-sprung and out-sprung rings with or without leak-off arrangements lie within the scope of this invention.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A seal for a valve stem (12) in a steam turbine valve comprising a ring carrier (14) surrounding at least a portion of a valve stem (12) mounted for axial reciprocating movement in a valve component; at least one inner ring groove (20) formed in an interior surface of said carrier; and a radially in-sprung ring (22) mounted in said at least one ring groove and engaged with said valve stem to thereby inhibit leakage of steam along said valve stem.

2. The seal of claim 1 wherein said at least one inner ring groove comprises a pair of axially spaced inner ring grooves (38, 40) with a radially in-sprung ring (42, 44) in each.

3. The seal of claim 2 and further comprising at least one leak-off groove (48) formed in an inner face of said carrier (32), said leak-off groove communicating with a leak-off port (52) extending through said carrier.

4. The seal of claim 3 wherein said at least one leak-off groove (48) is located axially between said pair of axially-spaced inner ring grooves (38, 40).

5. The seal of claim 4 wherein a second leak-off groove (46) is formed on said inner face of said carrier, below said pair of axially spaced inner ring grooves (38, 40) and above said flange (34).

6. The seal of claim 2 and further comprising at least one outer ring groove (74) formed in an exterior face of said carrier with a radially out-sprung ring (82) seated in said outer ring groove and engaged with a wall (84) of said valve component.

7. The seal of claim 6 and further comprising at least one leak-off groove (88) formed on an inner face of said carrier, said leak-off groove communicating with a leak-off port (92) extending through said carrier.

8. The seal of claim 7 wherein said at least one leak-off groove (88) is located axially between said pair of axially-spaced inner ring grooves (68, 70).

9. The seal of claim 6 wherein said at least one outer ring groove (74) comprises a pair of outer ring grooves (72, 74) with an out-sprung annular ring (80, 82) in each.

10. The seal of claim 3 wherein said at least one outer ring groove (74) comprises a pair of outer ring grooves (72, 74) with an out-sprung annular ring (80, 82) in each.
